# EUROPÄISCHE PATENTSCHRIFT

(11) **EP 1 999 399 B1**
(45) Veröffentlichungstag und Bekanntmachung des Hinweises auf die Patenterteilung: **09.12.2009**
(21) Anmeldenummer: 07703576.4
(22) Anmeldetag: 02.03.2007
(51) Int. Cl.: F16H 61/28, F16H 63/30, H02K 7/06

(54) **AKTUATORANORDNUNG UND SCHALTKUPPLUNGSANORDNUNG**
ACTUATOR ARRANGEMENT AND SHIFT CLUTCH ARRANGEMENT
INSTALLATION D'ACTIVATEUR ET INSTALLATION DE COUPLAGE DE CIRCUIT

(30) Priorität: 27.03.2006 DE 102006015688
(43) Veröffentlichungstag der Anmeldung: 10.12.2008
(73) Patentinhaber: GETRAG Getriebe- und Zahnradfabrik Hermann Hagenmeyer GmbH & Cie KG, 74199 Untergruppenbach (DE)
(72) Erfinder: SCHWEIHER, Mark, 74348 Lauffen (DE); BLESSING, Uli, Christian, 74078 Heilbronn (DE); GATZKA, Thorsten, 74074 Heilbronn (DE); KNOEDEL, Ulrich, 74379 Ingersheim (DE)
(74) Vertreter: Steil, Christian
(86) Internationale Anmeldenummer: PCT/EP2007/001785
(87) Internationale Veröffentlichungsnummer: WO 2007/110131

(56) Entgegenhaltungen:
- DE-A1-102005 017 026
- GB-A- 2 127 917
- US-A- 5 205 179

## Beschreibung

Die vorliegende Erfindung betrifft eine Aktuatoranordnung zum axialen Versetzen eines Betätigungsgliedes mittels einer Antriebskraft, die von einer elektrischen Maschine erzeugt wird, insbesondere für eine Schaltkupplungsanordnung eines Stufenwechselgetriebes, wobei das Betätigungsglied an einer Drehwelle axial verschieblich gelagert ist, wobei die elektrische Maschine einen gehäusefesten Stator und einen Rotor aufweist, der mit dem Betätigungsglied gekoppelt und koaxial zu dem Betätigungsglied angeordnet ist.

So eine Aktuatoranordnung ist aus dem Dokument DE 102005017026 A bekannt.

Eine Aktuatoranordnung ist bekannt aus dem Dokument DE 101 03 664 A1.

Die vorliegende Erfindung betrifft ferner eine Schaltkupplungsanordnung für ein Stufenwechselgetriebe, insbesondere für Kraftfahrzeuge, mit einer Führungsmuffe, die an einer Drehwelle festgelegt ist und eine Führungsmuffenverzahnung aufweist, mit einer Schaltmuffe, die eine Schaltmuffenverzahnung aufweist, die mit der Führungsmuffenverzahnung in Eingriff steht, so dass die Schaltmuffe in Bezug auf die Drehwelle drehfest und axial verschieblich gelagert ist, und mit einem Kupplungskörper, der an einem Losrad festgelegt ist, das an der Drehwelle drehbar gelagert ist, und der eine Kupplungskörperverzahnung aufweist, in die die Schaltmuffenverzahnung eingeschoben werden kann, um das Losrad drehfest mit der Drehwelle zu verbinden, wobei die Schaltmuffe mittels einer Aktuatoranordnung axial verschiebbar ist.

Aus dem Dokument DE 100 21 368 A1 ist ein mechatronischer Aktuator bekannt, bei dem ein Rotor eines Elektromotors als Hohlrad, als Planetenträger oder integriert in die Planetenräder eines Planetenradsatzes ausgebildet ist. Ein Sonnenrad des Planetenradsatzes ist als Spindel für einen Linearantrieb ausgebildet.

Eine elektromechanisch betätigbare Scheibenbremse ist aus dem Dokument DE 195 11 287 B4 bekannt. Ein Rotor ist als Hohlwelle ausgebildet und umgibt ein Untersetzungsgetriebe in Form eines Rollengewindetriebs, dessen Ausgangsglied als Betätigungsglied für die Scheibenbremse dient. Zwischen den Rotor und den Rollengewindetrieb kann ein Planetengetriebe geschaltet sein.

Das Dokument DE 10 2004 013 450 B4 betrifft eine Schalteinrichtung für ein Stufenwechselgetriebe. Schalt- und Synchronisierungsvorgänge werden elektromagnetisch realisiert. Ein Losrad und eine Führungsmuffe sind zur Führung eines magnetischen Flusses ausgelegt, der von einem Stator erzeugt wird. An der Führungsmuffe sind Schaltstifte axial verschieblich gelagert, die zur Herstellung eines Formschlusses mit einem Losrad dienen.

Aus dem Dokument DE 199 47 405 A1 ist ein Stufenwechselgetriebe in Vorgelegebauweise bekannt, bei dem eine Schaltmuffe einer Synchronschaltkupplung mittels eines elektrischen Linear-Schrittmotors betätigbar ist. Der Schrittmotor kann als Reluktanzmotor ausgebildet und in dem Getriebegehäuse aufgenommen sein.

Ferner offenbart das oben genannte Dokument DE 101 03 664 A1 eine Synchronisiereinrichtung, bei der die Schaltmuffe als Teil des elektrischen Antriebs ausgebildet ist. Dabei kann der Antrieb als Linearmotor oder als rotatorischer Antrieb ausgebildet sein. Im letzteren Fall ist die Schaltmuffe über Wälz- oder Gleitlager gegenüber einer Spindel drehbar, aber mit dieser verschiebbar gelagert. Die Spindel trägt eine elektromotorische Komponente und bildet mit zwei sich am Gehäuse abstützenden Spindelmuttern einen Rotations-Translationswandler.

Aus dem Dokument DE 10 2005 017 026 A1 ist eine Aktuatoranordnung für eine Schaltkupplungsanordnung bekannt, die eine zu einer Drehachse konzentrisch angeordnete elektrische Maschine mit einem gehäusefesten Stator und einem Rotor beinhaltet. Der Rotor ist über einen Stift und eine Schraubenfeder mit einem Ringbauteil gekoppelt. Das Ringbauteil ist durch geeignete Maßnahmen axial gegenüber dem Stator verschiebbar, jedoch nicht verdrehbar. Das Ringbauteil weist am Innenumfang einen Ringvorsprung auf, der in eine Umfangsnut einer Schaltmuffe der Schaltkupplungsanordnung greift. Hierbei wird der Rotor nur dann angetrieben, wenn ein Axialversatz der Schaltmuffe gewünscht ist.

Vor diesem Hintergrund ist es die Aufgabe der Erfindung, eine verbesserte Aktuatoranordnung und eine verbesserte Schaltkupplungsanordnung anzugeben.

Die obige Aufgabe wird gemäß der vorliegenden Erfindung ferner gelöst durch eine Aktuatoranordnung gemäß Anspruch 1, zum axialen Versetzen eines Betätigungsgliedes mittels einer Antriebskraft, die von einer elektrischen Maschine erzeugt wird, insbesondere für eine Schaltkupplungsanordnung eines Stufenwechselgetriebes, wobei das Betätigungsglied an einer Drehwelle axial verschieblich gelagert ist, und wobei die elektrische Maschine einen gehäusefesten Stator und einen Rotor aufweist, der mit dem Betätigungsglied gekoppelt und koaxial zu dem Betätigungsglied angeordnet ist, wobei der Rotor mit dem Betätigungsglied über einen Rotations-Translationswandler gekoppelt ist, und zwar derart, dass das Betätigungsglied bei einer Drehung relativ zu dem Rotor in axialer Richtung versetzt wird.

Bei dieser Ausführungsform dreht der Rotor im Betrieb mit dem Betätigungsglied (und damit mit der Drehwelle) mit. Eine Versetzung des Betätigungsgliedes in axialer Richtung erfolgt durch eine Relativdrehung zwischen Rotor und Betätigungsglied, also indem der Rotor für einen bestimmten Zeitraum etwas langsamere oder etwas schneller als das Betätigungsglied angetrieben wird.

Diese Ausführungsform kann insbesondere in radialer Richtung besonders kompakt realisiert werden.

Die obige Aufgabe wird ferner gelöst durch eine Schaltkupplungsanordnung gemäß Anspruch 11.

Bei der Aktuatoranordnung gemäß der vorliegenden Erfindung ist es von besonderem Vorteil, wenn der Rotations-Translationswandler einen Wandlerabschnitt am Innenumfang des Rotors aufweist.

Bei dieser Ausführungsform kann der Rotations-Translationswandler beispielsweise unmittelbar zwischen dem Rotor und dem Betätigungsglied wirken.

Ferner ist es vorteilhaft, wenn der Rotor an einem gehäusefesten Abschnitt axial gelagert ist.

Dies kann beispielsweise über Gleitlager erfolgen.

Von besonderem Vorteil ist es jedoch, wenn der Rotor oder der gehäusefeste Abschnitt einen radialen Vorsprung aufweist, der in eine radiale Nut des anderen Teiles greift.

Bei dieser Ausführungsform lässt sich die axiale Abstützung konstruktiv besonders einfach realisieren.

Von besonderem Vorteil ist es, wenn der Vorsprung als Ringsteg ausgebildet ist, der in Umfangsrichtung gleichmäßig an der Nut angreift.

Hierbei werden wiederum tribologische Vorteile erzielt, da die axialen Kräfte über relativ große Flächen (Ringstegflanke) übertragen werden.

Gemäß einer alternativen Ausführungsform stützt sich der Rotor in axialer Richtung an einer mit der Drehwelle verbundenen Führungsmuffe (oder einem sonstigen mit der Drehwelle verbundenen Teil oder an der Drehwelle selbst) ab.

Hierdurch kann die axiale Abstützung des Rotors ohne Abstützung über das Gehäuse (oder den Stator) oder über einen Radsatz erfolgen. Insgesamt kann so auch eine einfachere Montage erreicht werden.

Vorzugsweise wird eine Aktuatoranordnung geschaffen, die eine elektrische Maschine mit einem Stator und einem Rotor aufweist, die koaxial zu einer Drehwelle angeordnet ist, wobei der Rotor mit einem Betätigungsglied gekoppelt ist und wobei der Stator in Umfangsrichtung unterbrochen ist, um in radialer Richtung Bauraum für benachbarte Bauteile zu schaffen.

Es ist insbesondere vorteilhaft, wenn diese Ausgestaltung des Stators mit Unterbrechung in Umfangsrichtung bei einer der zuvor genannten Aktuatoranordnungen verwendet wird.

Insbesondere bei Verwendung in einem Getriebe ist der Bauraum häufig begrenzt, beispielsweise durch benachbarte, parallel verlaufende Wellen oder Ähnliches. In diesem Fall kann der Stator in Umfangsrichtung unterbrochen sein, um hier Platz zu schaffen.

Zu diesem Zweck ist es ferner vorteilhaft, wenn der Stator am Außenumfang an benachbarte Bauteile angepasst ist, derart, dass der Stator am Außenumfang unrund ausgebildet ist.

Bei dieser Ausführungsform lässt sich ein vorhandener Bauraum besonders günstig ausnutzen, indem ein möglichst großes Volumen für die Statorwicklungen bereitgestellt wird. Damit lässt sich innerhalb des vorhandenen Bauraumes eine größtmögliche Leistung der elektrischen Maschine realisieren. Als unrund soll hier jede von einer Kreisform abweichende Form verstanden werden.

Von besonderem Vorteil ist es dabei, wenn der Stator am Außenumfang an ein Gehäuse angepasst ist.

Insgesamt ist es bei allen Ausführungsformen bevorzugt, wenn der Rotor in einem den Stator ebenfalls aufnehmenden Gehäuse keine gesonderte Lagerung an dem Gehäuse benötigt. Die Rotationsbewegung des Rotors kann vorteilhafterweise über den Rotations-Translationswandler (direkt oder indirekt) auf das Betätigungsglied übertragen werden.

Der Rotations-Translationswandler kann als Spindeltrieb ausgebildet sein, als Kugelgewindetrieb, als Kulissenführung, Federbandgetriebe oder Ähnliches.

Generell erfolgt eine Axialkraftübertragung zur Verschiebung des Betätigungsgliedes nicht punktuell, wie bei einer Schaltgabel, sondern durch Bauteile, die eine große Fläche aufweisen und daher tribologisch wenig Probleme bereiten.

Ferner ist es vorteilhaft, wenn die elektrische Maschine, beispielsweise bei einem Drehzahlsprung von hohe auf niedrige Drehzahlen, als Generator verwendet wird. Hierbei kann die rotatorische Bewegung in elektrische Energie umgewandelt werden (Rekuperation). Der Wirkungsgrad einer Schaltkupplungsanordnung lässt sich dadurch stark verbessern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine erste Ausführungsform einer erfindungsgemäßen Schaltkupplungsanordnung;
- Fig. 2: eine schematische Längsschnittansicht durch eine nicht zur Erfindung gehörende Schaltkupplungsanordnung;
- Fig. 3: eine schematische Querschnittsansicht durch einen Teil einer erfindungsgemäßen Aktuatoranordnung gemäß einer Ausführungsform;
- Fig. 4: eine schematische Querschnittsansicht durch eine Aktuatoranordnung gemäß einer weiteren Ausführungsform der Erfindung;
- Fig. 5: eine Kennlinie von Steigung über Weg eines Rotations-Translationswandlers, der in einer erfindungsgemäßen Aktuatoranordnung verwendet ist; und
- Fig. 6: eine schematische Längsschnittansicht durch eine modifizierte Ausführungsform der Schaltkupplungsanordnung der Fig. 1.

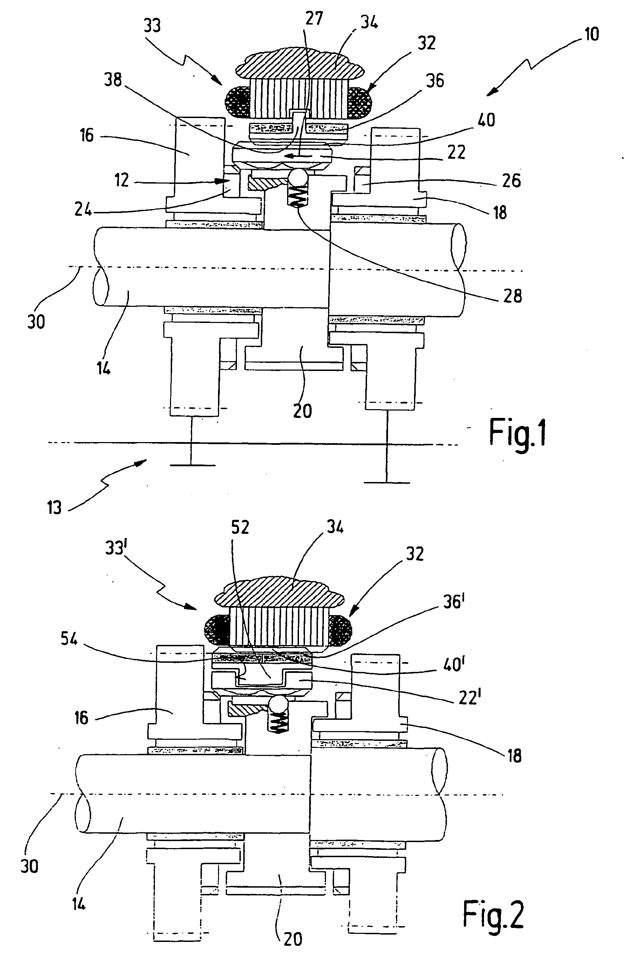

In Fig. 1 ist eine erste Ausführungsform einer Aktuatoranordnung generell mit 10 bezeichnet.

Die Aktuatoranordnung 10 dient zur Betätigung einer Schaltkupplungsanordnung 12 eines Stufenwechselgetriebes 13. Das Stufenwechselgetriebe 13 ist lediglich schematisch angedeutet.

Die Schaltkupplungsanordnung 12 ist einer Drehwelle 14 zugeordnet. Auf gegenüberliegenden Seiten der Schaltkupplungsanordnung 12 sind ein erstes Losrad 16 und ein zweites Losrad 18 angeordnet, die drehbar an der Drehwelle 14 gelagert sind.

Die Schaltkupplungsanordnung 12 weist eine Führungsmuffe 20 mit einer nicht näher bezeichneten äußeren Führungsmuffenverzahnung auf. Die Führungsmuffe 20 ist drehfest an der Drehwelle 14 festgelegt. Ferner weist die Schaltkupplungsanordnung 12 eine Schaltmuffe 22 mit einer inneren Schaltmuffenverzahnung auf.

Die Schaltmuffenverzahnung steht mit der Führungsmuffenverzahnung in Eingriff, derart, dass die Schaltmuffe 22 in Bezug auf die Drehwelle 14 drehfest und axial verschieblich gelagert ist.

An dem ersten Losrad 16 ist ein erster Kupplungskörper 24 festgelegt, der eine äußere Kupplungskörperverzahnung aufweist. In entsprechender Weise ist an dem zweiten Losrad 18 ein zweiter Kupplungskörper 26 festgelegt, der eine entsprechende äußere Kupplungskörperverzahnung aufweist.

Die Schaltmuffe 22 kann axial so verschoben werden, dass die Schaltmuffenverzahnung in jeweils eine der Kupplungskörperverzahnungen eingeschoben wird, um so das zugeordnete Losrad 16, 18 drehfest mit der Drehwelle 14 zu verbinden.

Die zum axialen Verschieben der Schaltmuffe 22 erforderliche Axialkraft 27 wird von einer elektrischen Maschine erzeugt, die nachstehend beschrieben werden wird.

Die Schaltkupplungsanordnung 12 kann eine beliebige herkömmliche Synchronisierung beinhalten, beispielsweise mit einem Synchronring (der in Fig. 1 nicht dargestellt ist), kann jedoch auch als Klauenkupplung (ohne Synchronisierung) ausgebildet sein.

In Fig. 1 ist bei 28 ein Kugel-Feder-Rastiersystem gezeigt, wie es auch in Kegelsynchronisierungen generell verwendet wird.

Ferner ist bei 30 in Fig. 1 eine Drehachse der Drehwelle 14 dargestellt.

Wie oben erwähnt, wird die Antriebskraft 27 mittels einer elektrischen Maschine 33 erzeugt, die einen Stator 32 und einen Rotor 36 aufweist.

Der Stator 32 ist an einem Gehäuse 34 des Stufenwechselgetriebes festgelegt.

Die elektrische Maschine 33 ist als rotatorische Maschine konzentrisch zu der Drehachse 30 ausgebildet. Die elektrische Maschine 33 kann beispielsweise eine bürstenlose Maschine mit permanent erregtem Rotor oder einem Läufer ähnlich einer Drehstrom-Asynchronmaschine sein.

Die elektrische Maschine 33 ist radial um die Schaltkupplungsanordnung 12 herum angeordnet. Der Stator 32 beinhaltet elektrisch bestromte Spulen (Feldspulen), die beispielsweise durch das Gehäuse 34 hindurch elektrisch angeschlossen sein können.

Der Rotor 36 ist in axialer Richtung generell mit dem Stator 32 ausgerichtet und ist zu diesem Zweck axial gelagert. Dies kann über Wälzlager erfolgen. Im vorliegenden Fall ist in schematischer Form angedeutet, dass der Rotor 36 an seinem Außenumfang einen Vorsprung in Form eines Ringsteges 38 aufweist, der in eine entsprechende Umfangsnut eines gehäusefesten Abschnittes (im vorliegenden Fall des Stators 32) greift. Es versteht sich, dass ein Vorsprung auch an dem Stator 32 und eine entsprechende Nut an dem Rotor 36 ausgebildet sein kann.

Zwischen dem Rotor 36 und der Schaltmuffe 22 ist ein Rotations-Translationswandler 40 vorgesehen, beispielsweise in Form eines Gewindetriebs, einer Kulissenführung, eines Kugelgewindetriebs oder Ähnlichem.

Im Betrieb dreht sich der Rotor 36 generell synchron mit der Drehwelle 14, so dass keine Relativdrehzahl zwischen dem Rotor 36 und der Schaltmuffe 22 eingerichtet wird. Demzufolge verbleibt die Schaltmuffe 22 axial in der so eingestellten Position. Zum axialen Verstellen der Schaltmuffe 22 wird die Drehzahl des Rotors 36 in Bezug auf die Drehwelle 14 verringert oder heraufgesetzt. Hierdurch wird der Rotor 36 in Drehrichtung gegenüber der Schaltmuffe 22 verstellt. Denn diese Relativdrehung wird von dem Rotations-Translationswandler 40 direkt in eine Axialbewegung der Schaltmuffe 22 umgesetzt. Sobald der gewünschte axiale Weg der Schaltmuffe 22 verfahren worden ist, wird die Drehzahl des Rotors 36 wieder auf die "Synchrondrehzahl", d.h. auf die gleiche Drehzahl wie die Drehwelle 14, eingestellt.

Bei der vorliegenden Ausführungsform wird in der elektrischen Kommutierung der Feldspule(n) im Stator 32 daher vorzugsweise die Drehzahl der Schaltkupplungsanordnung 12 (bzw. der Drehwelle 14) berücksichtigt. Diese kann beispielsweise durch Erfassung der Eingangswellendrehzahl eines Getriebes bzw. in jedem Teilstrang eines Doppelkupplungsgetriebes leicht ermittelt werden. Denn zu diesem Zweck sind in der Regel ohnehin Sensoren vorgesehen.

Die gewünschte Relativverdrehung zur Verstellung der Schaltmuffe 22 wird dann zu dieser "Synchrondrehzahl" addiert oder davon subtrahiert.

Vorzugsweise liegt die Schaltkupplungsanordnung 12 auf der dem Abtrieb des Getriebes 13 zugeordneten Seite (bei einem Vorgelegegetriebe folglich in der Regel an der Ausgangswelle). Dies ermöglicht, dass die Drehzahldynamik des Antriebsmotors (beispielsweise Verbrennungsmotor) des Kraftfahrzeuges, in dem das Stufenwechselgetriebe 13 eingebaut ist, nicht in gleichem Maße von der elektrischen Maschine 33 aufgebracht werden muss. Bei schnellen und dynamischen elektrischen Maschinen 33 ist jedoch auch dies generell möglich.

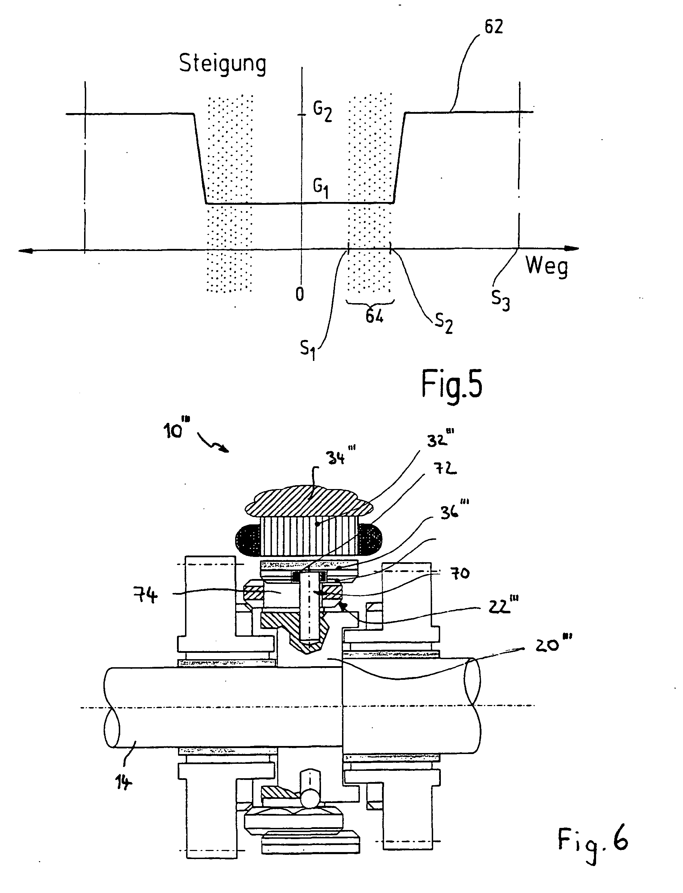

Ferner ist es generell denkbar, dass sich der Rotor 36 nicht an dem Stator 32 in axialer Richtung abstützt, sondern (beispielsweise über entsprechende Ausnehmungen in der Schaltmuffe 22) an der Führungsmuffe 20 (siehe Fig. 6).

Die elektrische Maschine 33 kann mit einer Einrichtung zur Umschaltung der Polzahlen im Stator 32 ausgestattet sein. Hierdurch kann die Feldfrequenz im Stator 32 an die Drehfrequenz bzw. Drehzahl der der Schaltkupplungsanordnung 12 zugeordneten Drehwelle 14 angepasst werden.

Die erfindungsgemäße Aktuatoranordnung 10 und die mit dieser angesteuerte erfindungsgemäße Schaltkupplungsanordnung 12 lassen sich bei allen denkbaren Stufenwechselgetrieben 13 verwenden, insbesondere bei automatisierten Schaltgetrieben, bei Doppelkupplungsgetrieben etc. Vorteilhaft ist hierbei insbesondere, dass eine Hydraulik generell überhaupt nicht mehr notwendig ist. Dies kann insbesondere dann von Vorteil sein, wenn beispielsweise auch die zugeordnete Kupplung (oder Doppelkupplung) nicht hydraulisch sondern elektromotorisch verstellt wird.

Bei der Aktuatoranordnung 10 der Fig. 1 ist es ferner zu Montagezwecken vorteilhaft, wenn der Rotor 36 und/oder der Stator 32 geteilt ausgebildet sind.

In dem Stufenwechselgetriebe 13 ist vorzugsweise für jede Schaltkupplungsanordnung 12 eine eigene Aktuatoranordnung 10 vorgesehen. Demzufolge ist es auch möglich, die unterschiedlichen Schaltkupplungsanordnungen 12 zugeordneten Gänge in überschneidender Art und Weise zu betätigen.

Ferner ist bei der Erfindung vorteilhaft, dass keine Schaltgestänge und auch keine Hilfsantriebe, wie z.B. Schaltwalzen, notwendig sind. Damit ergibt sich insgesamt auch eine kompakte Bauweise und ein verringerter Gesamtbauraum.

Die Wegsteuerung kann entweder über Sensoren erfasst und dann geregelt werden. Es ist jedoch auch möglich, die Wegsteuerung ohne Wegerfassung durchzuführen, indem die Schaltmuffe 22 in ihren Endpositionen gegen Anschläge gefahren wird. Hierdurch kann gewährleistet werden, dass der Rotor 36 immer im Feldbereich des Stators 32 bleibt.

Die Endanschläge können jedoch auch durch Sensoren abgetastet werden.

Fig. 2 zeigt eine Aktuatoranordnung 50. Die Aktuatoranordnung 50 entspricht hinsichtlich Aufbau und Funktionsweise generell der Aktuatoranordnung 10 der Fig. 1. Gleiche Elemente sind daher auch durch gleiche Bezugsziffern angegeben. Im Folgenden wird lediglich auf die Unterschiede eingegangen.

Bei der Aktuatoranordnung 50 ist ein Rotations-Translationswandler 40' zwischen dem Rotor 36' und dem Stator 32 angeordnet. Der Rotor 36' steht im Betrieb normalerweise still. Bei Bestromung der Feldspulen des Stators 32 dreht sich der Rotor 36' und wird mittels des Rotations-Translationswandlers 40' axial verschoben. Der Rotations-Translationswandler 40' ist dabei bevorzugt unmittelbar zwischen Stator 32 und Rotor 36' vorgesehen.

Der Rotor 36' ist ferner in axialer Richtung formschlüssig mit einer Schaltmuffe 22' gekoppelt. Im vorliegenden Fall ist an dem Innenumfang des Rotors 36' ein Vorsprung in Form eines umlaufenden Ringsteges 52 ausgebildet. In entsprechender Weise ist an der Schaltmuffe 22' eine umlaufende außenumfängliche Radialnut 54 ausgebildet, in die der Ringsteg 52 greift.

Es ist jedoch auch möglich, einen entsprechenden Vorsprung oder Ringsteg an der Schaltmuffe 22 vorzusehen, und an dem Rotor 36' eine entsprechende Radialnut.

Auch bei dieser Ausführungsform ist von Vorteil, dass aufgrund des umlaufenden Ringsteges 52 die auf die Schaltmuffe 22' übertragenen axialen Kräfte über eine vergleichsweise große Fläche übertragen werden, so dass die zwischen dem Rotor 36' und der Schaltmuffe 22' generell vorhandenen Differenzdrehzahlen tribologisch gut beherrschbar sind.

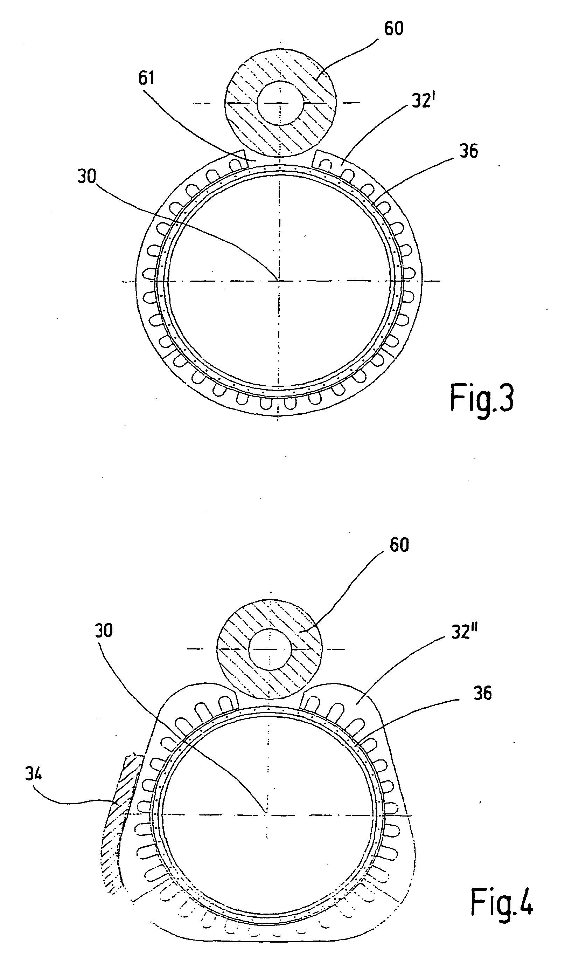

In Fig. 3 ist in schematischer Form eine elektrische Maschine 33 in Querschnittsansicht dargestellt.

Man erkennt, dass der Stator 32' generell an seinem Innenumfang kreisrund ausgebildet ist und an den Außenumfang des ebenfalls kreisrunden Rotors 36 angepasst ist. Um die elektrische Maschine 33 auch in beengten Einbaulagen, beispielsweise bei einer direkt benachbarten Welle 60, verwenden zu können, kann vorgesehen sein, den Stator 32' an einer oder mehreren Stellen auszusparen bzw. unterbrochen auszubilden. Eine solche Unterbrechung bzw. Aussparung ist in Fig. 3 bei 61 gezeigt.

Wie es in Fig. 4 gezeigt ist, ist es auch möglich, den Stator 32" bzw. dessen Mantel an seinem Außenumfang so auszubilden (unrund), dass er an benachbarte Bauteile, wie z.B. ein Gehäuse 34, angepasst ist.

Hierdurch kann der vorhandene Bauraum zur Unterbringung möglichst großer Feldspulen verwendet werden. Auch kann eine formschlüssige Drehmomentabstützung über das Gehäuse 34 realisiert werden.

In Fig. 5 ist ferner in schematischer Form ein Diagramm der Steigung 62 eines Rotations-Translationswandlers 40 über dem Weg der Schaltmuffe 22 dargestellt.

Man erkennt, dass die Steigung in einem Bereich von einer Nullstellung der Schaltmuffe 22 bis über einen Synchronisierungsbereich 64 relativ gering ausgebildet sein kann, mit einem Wert beispielsweise von G₁.

Über den Wegabschnitt der Synchronisierung hinaus kann die Kennlinie 62 eine sehr viel höhere Steigung G₂ besitzen.

Eine höhere Steigung bedeutet in diesem Zusammenhang, dass bei gleichem Drehwinkel eine größere translatorische Bewegung erzeugt wird. In der Phase des Weges der Schaltmuffe 22 zum Einlegen einer Gangstufe ist nach der Synchronisierung möglichst schnell ein Formschluss mit dem Kupplungskörper herzustellen. Um dies zu erreichen, wird die Steigung auf einen höheren Wert G₂ erhöht, um so bei gleichbleibender Drehzahl die Schaltmuffe 22 schneller zu bewegen und damit schneller einen Formschluss herzustellen.

Fig. 6 zeigt eine modifizierte Ausführungsform der Schaltkupplungsanordnung 12 der Fig. 1, die eine modifizierte Aktuatoranordnung 10'" aufweist. Die Aktuatoranordnung 10'" entspricht hinsichtlich Aufbau und Funktionsweise generell der Aktuatoranordnung 10 der Fig. 1. Gleiche Elemente sind daher auch durch gleiche Bezugsziffern angegeben. Im Folgenden wird lediglich auf die Unterschiede eingegangen.

Bei der Aktuatoranordnung 10'" ist der Rotor 36'" in axialer Richtung mit der Führungsmuffe 20'" (oder einem sonstigen mit der Welle 14 fest verbundenen Bauteil) verbunden.

Hierdurch kann der Montageaufwand der Aktuatoranordnung 10'" gegenüber der Aktuatoranordnung 10 der Fig. 1 vereinfacht werden. Eine unmittelbare Kopplung zwischen dem Rotor 36'" und dem Stator 32'" ist nicht notwendig. Diese können allein durch einen Luftspalt miteinander verbunden sein.

Die Verbindung des Rotors 36"' mit der Führungsmuffe 20'" erfolgt über wenigstens einen (in der Regel jedoch mehrere, über den Umfang verteilte) Radialstift(e) 70, der in eine Ringnut des Rotors 36"' greift. Der Radialstift 70 steht in radialer Richtung gegenüber der Führungsmuffe 20'" vor und ist mit dieser fest verbunden. Die axiale Abstützung des Rotors 36"' an dem Radialstift 70 kann zur Verringerung der Reibung über einen oder mehrere Reibringe 72 erfolgen.

Der Radialstift 70 durchsetzt die zu diesem Zweck abgewandelte Schaltmuffe 22"'. Genauer gesagt weist die Schaltmuffe 22"' für den Radialstift 70 eine Axialausnehmung 74 auf, so dass der Radialstift 70 die Schaltmuffe 22"' im Wesentlichen behinderungsfrei durchsetzen kann.

Bei den Aktuatoranordnungen 10, 10'" der Fig. 1, 6 kann eine Energierückgewinnung beim Abbremsen des Rotors erfolgen. Ferner kann die elektrische Maschine 33, je nach Ausgestaltung des Rotations-Translationswandlers 40, kritische Synchronvorgänge unterstützen.

## Patentansprüche

1. Aktuatoranordnung (10) zum axialen Versetzen eines Betätigungsgliedes (22) mittels einer Antriebskraft (27), die von einer elektrischen Maschine (33) erzeugt wird, insbesondere für eine Schaltkupplungsanordnung (12) eines Stufenwechselgetriebes (13), wobei das Betätigungsglied (22) an einer Drehwelle (14) axial verschieblich gelagert ist, wobei die elektrische Maschine (33) einen gehäusefesten Stator (32) und einen Rotor (36) aufweist, der mit dem Betätigungsglied (22) gekoppelt und koaxial zu dem Betätigungsglied (22) angeordnet ist,
**dadurch gekennzeichnet, dass**
der Rotor (36) mit dem Betätigungsglied (22) über einen Rotations-Translationswandler (40) gekoppelt ist, derart, dass das Betätigungsglied (22) bei einer Drehung relativ zu dem Rotor (36) in axialer Richtung versetzt wird.

2. Aktuatoranordnung nach Anspruch 1, **dadurch gekennzeichnet, dass** der Rotations-Translationswandler (40) einen Wandlerabschnitt am Innenumfang des Rotors (36) aufweist.

3. Aktuatoranordnung nach Anspruch 1 oder 2, **dadurch gekennzeichnet, dass** der Rotor (36) an einem gehäusefesten Abschnitt (32, 34) axial gelagert ist.

4. Aktuatoranordnung nach Anspruch 3, **dadurch gekennzeichnet, dass** der Rotor (36) oder der gehäusefeste Abschnitt (32, 34) einen radialen Vorsprung (38) aufweist, der in eine radiale Nut des anderen Teiles greift.

5. Aktuatoranordnung nach Anspruch 4, **dadurch gekennzeichnet, dass** der Vorsprung (38) als Ringsteg (38) ausgebildet ist, der in Umfangsrichtung gleichmäßig an der Nut angreift.

6. Aktuatoranordnung nach Anspruch 1, **dadurch gekennzeichnet, dass** der Rotor (36"') sich in axialer Richtung an einer mit der Drehwelle (14) verbundenen Führungsmuffe (20"') abstützt.

7. Aktuatoranordnung nach einem der Ansprüche 1 bis 6, **dadurch gekennzeichnet, dass** die Aktuatoranordnung (10; 50) eine elektrische Maschine (33) mit einem Stator (32) und einem Rotor (36) aufweist, die koaxial zu einer Drehwelle (14) angeordnet ist, wobei der Rotor (36) mit einem Betätigungsglied (22) gekoppelt ist, und wobei der Stator (32') in Umfangsrichtung unterbrochen ist, um in radialer Richtung Bauraum für benachbarte Bauteile (60) zu schaffen.

8. Aktuatoranordnung nach einem der Ansprüche 1 bis 7, **dadurch gekennzeichnet, dass** der Stator (32") am Außenumfang an benachbarte Bauteile (34) angepasst ist, derart, dass der Stator (32") am Außenumfang unrund ausgebildet ist.

9. Aktuatoranordnung nach Anspruch 8, **dadurch gekennzeichnet, dass** der Stator (32") am Außenumfang an ein Gehäuse (34) angepasst ist.

10. Aktuatoranordnung nach einem der Ansprüche 1 bis 9, **dadurch gekennzeichnet, dass** der Rotations-Translationswandler (40) eine nichtlineare Kennlinie zwischen Drehwinkel und axialem Weg einrichtet.

11. Schaltkupplungsanordnung (12) für ein Stufenwechselgetriebe (13), insbesondere für Kraftfahrzeuge, mit einer Führungsmuffe (20), die an einer Drehwelle (14) festgelegt ist und eine Führungsmuffenverzahnung aufweist, mit einer Schaltmuffe (22), die eine Schaltmuffenverzahnung aufweist, die mit der Führungsmuffenverzahnung in Eingriff steht, so dass die Schaltmuffe (22) in Bezug auf die Drehwelle (14) drehfest und axial verschieblich gelagert ist, und mit einem Kupplungskörper (24, 26), der an einem Losrad (16, 18) festgelegt ist, das an der Drehwelle (14) drehbar gelagert ist, und der eine Kupplungskörperverzahnung aufweist, in die die Schaltmuffenverzahnung eingeschoben werden kann, um das Losrad (16, 18) drehfest mit der Drehwelle (14) zu verbinden,
**dadurch gekennzeichnet, dass** die Schaltmuffe (22) mittels einer Aktuatoranordnung (10; 50) nach einem der Ansprüche 1 bis 10 axial verschiebbar ist.

## Claims

1. An actuator arrangement (10) for the axial displacement of an actuation member (22) by means of a drive force (27) which is generated by an electric machine (33), in particular for a shift-clutch arrangement (12) of a multi-step gear change transmission (13), the actuation member (22) being mounted axially displaceably on a rotary shaft (14), the electric machine (33) having a stator (32) fixed to a housing and a rotor (36) which is coupled to the actuation member (22) and is arranged coaxially with respect to the actuation member (22),
**characterized in that** the rotor (36) is coupled to the actuation member (22) via a rotation-translation converter (40), in such a way that, during rotation in relation to the rotor (36), the actuation member (22) is displaced in the axial direction.

2. The actuator arrangement according to Claim 1, **characterized in that** the rotation-translation converter (40) has a converter portion on the inner circumference of the rotor (36).

3. The actuator arrangement according to Claim 1 or 2, **characterized in that** the rotor (36) is mounted axially on a portion (32, 34) fixed to a housing.

4. The actuator arrangement according to Claim 3, **characterized in that** the rotor (36) or the portion (32, 34) fixed to the housing has a radial projection (38) which engages into a radial groove of the other part.

5. The actuator arrangement according to Claim 4, **characterized in that** the projection (38) is designed as an annular web (38) which engages on the groove uniformly in the circumferential direction.

6. The actuator arrangement according to Claim 1, **characterized in that** the rotor (36"') is supported in the axial direction at a guide sleeve (20"') connected to the rotary shaft (14).

7. The actuator arrangement, in particular according to one of Claims 1 to 6, **characterized in that** the actuator arrangement (10; 50) has an electric machine (33) which comprises a stator (32) and a rotor (36), the electric machine (33) being arranged coaxially with respect to the rotary shaft (14), wherein the rotor (36) is coupled to an actuation member (22), and wherein the stator (32') is interrupted in the circumferential direction in order to provide construction space for adjacent components (60) in the radial direction.

8. The actuator arrangement according to one of Claims 1 to 7, **characterized in that** the stator (32") is adapted on the outer circumference to adjacent components (34), in such a way that the stator (32") is of non-round design on the outer circumference.

9. The actuator arrangement according to Claim 8, **characterized in that** the stator (32") is adapted on the outer circumference to a housing (34).

10. The actuator arrangement according to one of Claims 1 to 9, **characterized in that** the rotation-translation converter (40) sets up a non-linear characteristic curve between angle of rotation and axial travel.

11. A shift-clutch arrangement (12) for a multi-step gear change transmission (13), in particular for motor vehicles, comprising a guide sleeve (20) which is secured to a rotary shaft (14) and has a guide-sleeve toothing, a shift sleeve (22) having a shift-sleeve toothing which is in engagement with the guide-sleeve toothing, so that the shift sleeve (22) is mounted fixedly in terms of rotation and axially displaceably with respect to the rotary shaft (14), and a clutch body (24, 26) which is secured to a loose wheel (16, 18) mounted rotatably on the rotary shaft (14) and has a clutch-body toothing, into which the shift-sleeve toothing can be pushed in order to connect the loose wheel (16, 18) fixedly in terms of rotation to the rotary shaft (14),
**characterized in that** the shift sleeve (22) is axially displaceable by means of an actuator arrangement (10; 50) according to one of Claims 1 to 10.

## Revendications

1. Agencement d'actionneur (10) pour le déplacement axial d'un organe d'actionnement (22) au moyen d'une force d'entraînement (27) produite par une machine électrique (33), en particulier pour un agencement d'embrayage (12) d'une boîte de vitesses étagée (13), l'organe d'actionnement (22) étant monté avec possibilité de translation axiale sur un arbre rotatif (14), la machine électrique (33) présentant un stator (32) lié au carter et un rotor (36) qui est couplé à l'organe d'actionnement (22) et disposé coaxialement à l'organe d'actionnement (22),
**caractérisé en ce que**
le rotor (36) est couplé à l'organe d'actionnement (22) par l'intermédiaire d'un convertisseur rotation-translation (40) de telle sorte que l'organe d'actionnement (22) est déplacé en direction axiale lors d'une rotation par rapport au rotor (36).

2. Agencement d'actionneur selon la revendication 1, **caractérisé en ce que** le convertisseur rotation-translation (40) présente une section de convertisseur sur la circonférence intérieure du rotor (36).

3. Agencement d'actionneur selon la revendication 1 ou 2, **caractérisé en ce que** le rotor (36) est monté axialement sur une section (32, 34) liée au carter.

4. Agencement d'actionneur selon la revendication 3, **caractérisé en ce que** le rotor (36) ou la section (32, 34) liée au carter présente une saillie radiale (38) qui s'engage dans une rainure radiale de l'autre pièce.

5. Agencement d'actionneur selon la revendication 4, **caractérisé en ce que** la saillie (38) est réalisée sous la forme d'une nervure annulaire (38) qui s'engage régulièrement dans la rainure en direction circonférentielle.

6. Agencement d'actionneur selon la revendication 1, **caractérisé en ce que** le rotor (36"') s'appuie en direction axiale sur un manchon de guidage (20"') relié à l'arbre rotatif (14).

7. Agencement d'actionneur selon l'une des revendications 1 à 6, **caractérisé en ce que** l'agencement d'actionneur (10 ; 50) présente une machine électrique (33) comportant un stator (32) et un rotor (36) qui sont disposés coaxialement à un arbre rotatif (14), le rotor (36) étant couplé à un organe d'actionnement (22) et le stator (32') étant interrompu en direction circonférentielle pour créer un espace libre en direction radiale pour des composants voisins (60).

8. Agencement d'actionneur selon l'une des revendications 1 à 7, **caractérisé en ce que** le stator (32") est adapté sur sa circonférence extérieure à des composants voisins (34) de telle sorte que le stator (32") présente une forme non ronde sur sa circonférence extérieure.

9. Agencement d'actionneur selon la revendication 8, **caractérisé en ce que** le stator (32") est adapté à un carter (34) sur sa circonférence extérieure.

10. Agencement d'actionneur selon l'une des revendications 1 à 9, **caractérisé en ce que** le convertisseur rotation-translation (40) produit une courbe caractéristique non linéaire entre l'angle de rotation et la course axiale.

11. Agencement d'embrayage (12) pour une boîte de vitesses étagée (13), en particulier pour véhicules à moteur, avec un manchon de guidage (20) qui est assujetti à un arbre rotatif (14) et présente une denture de manchon de guidage, avec un manchon baladeur (22) qui présente une denture de manchon baladeur qui est en prise avec la denture de manchon de guidage de telle sorte que le manchon baladeur (22) est monté de manière solidaire en rotation et avec possibilité de translation axiale par rapport à l'arbre rotatif (14), et avec un corps d'accouplement (24, 26) qui est assujetti à une roue folle (16, 18) qui est montée tournante sur l'arbre rotatif (14) et qui présente une denture de corps d'accouplement dans laquelle peut être introduite la denture de manchon baladeur pour rendre la roue folle (16, 18) solidaire en rotation avec l'arbre rotatif (14), **caractérisé en ce que** le manchon baladeur (22) est déplaçable axialement au moyen d'un agencement d'actionneur (10 ; 50) selon l'une des revendications 1 à 10.
